# EUROPEAN PATENT APPLICATION

(11) **EP 2 930 820 A1**
(43) Date of publication of application: **14.10.2015**
(21) Application number: 13860892.2
(22) Date of filing: 13.11.2013
(51) Int. Cl.: H02J 7/10, H01M 10/44, H01M 10/48, H02J 7/00, H02J 7/04

(54) **CHARGE-DISCHARGE MANAGEMENT DEVICE, POWER CONDITIONER, POWER STORAGE DEVICE, AND PROGRAM**

(30) Priority: 05.12.2012 JP 2012266509
(71) Applicant: Panasonic Intellectual Property Management Co., Ltd., Osaka-shi, Osaka 540-6207 (JP)
(72) Inventor: ADACHI, Masakazu, Chuo-ku, Asaki-shi, Osaka 540-6207 (JP); KOBAYASHI, Susumu, Chuo-ku, Asaki-shi, Osaka 540-6207 (JP); YOSHIZAWA, Jin, Chuo-ku, Asaki-shi, Osaka 540-6207 (JP)
(74) Representative: Appelt, Christian W.
(86) International application number: PCT/JP2013/006665
(87) International publication number: WO 2014/087580

(57) **Abstract**

A charge-discharge management device includes an instruction unit, an temperature input unit and a setting unit in order to manage charge and discharge states of a storage battery for supplying and receiving electric power to and from a distribution network for supplying electric power to an electric load. The instruction unit indicates magnitude of a charge current for the storage battery. The temperature input unit obtains a battery temperature of the storage battery. The setting unit sets the magnitude of the charge current to a first standard value if the battery temperature is in a normal range. If the battery temperature is out of the normal range, the setting unit sets the charge current to be below the first standard value and more increases a difference between the charge current and the first standard value as a degree of deviation from the normal range is larger.

## Description

### Technical Field

The invention relates to a charge-discharge management device for managing charging and discharging of a storage battery, a power conditioner including the charge-discharge management device along with a power converter, a power storage device including the power conditioner along with the storage battery, and a program for allowing a computer to function as the charge-discharge management device.

### Background Art

In general, a lifetime of a storage battery depends on various conditions such as a kind of the storage battery, depth of discharge, a battery temperature, a number of charge/discharge cycles, amplitude of a charge current and amplitude of a discharge current.

A technology for suppressing degradation of a storage battery, of which main object is a lithium-ion battery, by relating charge currents to battery temperatures is described in JP Pub. No. 2006-203978 (hereinafter referred to as "Document 1"). A charging apparatus described in Document 1 includes a temperature measuring circuit for measuring a temperature (a battery temperature) of a storage battery, and is configured to adjust a charge current in response to a battery temperature measured with the temperature measuring circuit.

Specifically, the charging apparatus stops the storage battery charging if the battery temperature is 45°C or more. The charging apparatus charges the storage battery by a charge current of 0.2C if the battery temperature is 30°C or more and below 45°C. The charging apparatus charges the storage battery by a charge current of 1C if the battery temperature is below 30°C. "C" represents a charge current in a case where a rated capacity per one hour of the storage battery (unit: Ah) is 1. For example, in a case of a storage battery of which rated capacity is 2000mAh, a charge current of 0.2C means that the charge current is 400mA.

A similar technology is described in JP Pub. No. 2007-259509 (hereinafter referred to as "Document 2"). The technology includes a sensor for detecting a battery temperature and adjusts a charge current in response to the battery temperature. That is, a temperature range that employs a normal charge current and a temperature range that employs a charge current larger than the normal charge current are defined with respect to the battery temperature. Document 2 includes embodiments. For example, Document 2 discloses that a storage battery is charged by a charge current of 1.2C or more if the battery temperature is 30°C or more and below 50°C and that the storage battery is charged by a charge current of 1.0C if the battery temperature is 50°C or more.

It is considered that degradation of the storage battery would be suppressed and the lifetime of the storage battery would be improved if the charge current is adjusted in response to the battery temperature as described above. In the technology described in Document 1, the charge current is selected from two kinds of 0.2C and 1C. In the embodiments of the technology described in Document 2, the charge current is selected from two kinds of 1.2C and 1.0C. Document 1 describes a selection for stopping charging. Document 2 also discloses that 0.2C or more, desirably 0.8C or more is selected in a battery temperature range for the charge current of 1C. Anyhow, the charge current is selected from two kinds.

As stated above, in a configuration that a charge current is selected from two kinds in response to a battery temperature, the charge current is to suddenly change between before and after such preset temperatures during charging. Such a sudden change of the charge current may cause stress on a storage battery.

### Summary of Invention

It is an object of the present invention to provide a charge-discharge management device capable of suppressing stress on a storage battery owing to a sudden change of a charge current. It is a further object thereof to provide a power conditioner including the charge-discharge management device along with a power converter, a power storage device including the power conditioner along with the storage battery, and a program for allowing a computer to function as the charge-discharge management device.

The present invention is a charge-discharge management device (10) configured to manage charge and discharge states of a storage battery (21), for supplying and receiving electric power to and from a distribution network (31) for supplying electric power to an electric load(s) (30). The charge-discharge management device (10) includes: an instruction unit (11) having a function configured to indicate magnitude of a charge current for the storage battery (21); an temperature input unit (12) configured to obtain a battery temperature of the storage battery (21); and a setting unit (13) having a function configured to set the magnitude of the charge current in accordance with the battery temperature obtained through the temperature input unit (12). The setting unit (13) further has a function configured to set the magnitude of the charge current to a specified first standard value if the battery temperature is in a normal range, and a function configured, if the battery temperature is out of the normal range, to set the charge current to be below the first standard value and to more increase a difference between the charge current and the first standard value as a degree of deviation from the normal range is larger.

In an embodiment, the instruction unit (11) further has a function configured to indicate an upper limit of a discharge current from the storage battery (21). The setting unit (13) further has a function configured to set the upper limit of the discharge current to a specified second standard value if the battery temperature is in the normal range, and a function configured, if the battery temperature is out of the normal range, to set the upper limit of the discharge current to be below the second standard value and to more increase a difference between the upper limit of the discharge current and the second standard value as the degree of deviation from the normal range is larger.

In an embodiment, the charge-discharge management device (10) further includes a notification output unit (15) and an instruction input unit (16). The notification output unit (15) is configured to output a notification signal if the battery temperature obtained through the temperature input unit (12) is out of the normal range during a period of time while the storage battery (21) is charging or discharging. The instruction input unit (16) is configured to wait to receive an instruction to keep or stop the storage battery charging or discharging if the notification output unit outputs the notification signal. The instruction unit (11) has a function configured, if the instruction input unit (16) receives the instruction to stop the storage battery (21) charging or discharging, to stop the storage battery (21) from charging or discharging.

In an embodiment, the charge-discharge management device (10) further includes a correction unit (14). The correction unit (14) is configured to calculate an index value representing a degree of degradation of the storage battery (21) to more decrease the first and second standard values as the degree of degradation represented by the index value more advances.

In an embodiment, the charge-discharge management device (10) further includes a communication interface unit (17). The communication interface unit (17) is configured to communicate with a controller (40) that manages an operation(s) of the electric load(s) (30). The setting unit (13) is configured to be notified of available electric power from the controller (40) through the communication interface unit (17) during a period of time while the storage battery (21) is charging. The available electric power is a difference between electric power supplied from a power supply source for supplying electric power to the storage battery (21) and the electric load(s) (30), and electric power consumed by the electric load(s) (30). The magnitude of the charge current is set based on the available electric power. The setting unit is also configured, during the period of time while the storage battery (21) is discharging, to notify the controller (40) through the communication interface unit (17) of the upper limit of the discharge current, which is a criterion of electric power that can be supplied from the storage battery (21) to the electric load(s) (30).

In an embodiment, the storage battery (21) is equipped for an electrically driven vehicle (25) configured to consume electric power as traveling energy. The electrically driven vehicle (25) includes a power coupler (26) configured to select from a coupled state that allows the storage battery (21) to supply or receive electric power to or from the distribution network (31) and a separated state that it is separated from the distribution network (31) and allows the electrically driven vehicle to travel. The instruction unit (11) is configured to operate for a period of time while the storage battery (21) is coupled to the distribution network (31).

A power conditioner (22) of the invention includes a charge-discharge management device (10) as stated above, and a power converter (23) configured to perform bidirectional power conversion between the storage battery (21) and the distribution network (31) based on a content that is indicated from the charge-discharge management device (10).

A power storage device (20) of the invention includes the aforementioned power conditioner (22), the storage battery (21), and one housing in which the power conditioner and the storage battery are housed.

A program of the invention allows a computer to function as a charge-discharge management device (10) as stated above. The invention is not limited to the program. The invention may be a computer-readable medium in which the program is stored.

In the configuration of the invention, if the battery temperature is out of the normal range, the charge current varies according to the degree of deviation and accordingly a sudden change in the charge current can be suppressed. As a result, stress on the storage battery and oscillation of the charge current can be suppressed. In addition, since the upper limit of the discharge current varies according to the degree of deviation of the battery temperature from the normal range, a sudden large reduction in electric power supplied to the electric load(s) that is supplied with electric power from the storage battery can be prevented.

### Brief Description of Drawings

Preferred embodiments of the invention will now be described in further details. Other features and advantages of the present invention will become better understood with regard to the following detailed description and accompanying drawings where:
FIG. 1 is a block diagram showing an embodiment of the present invention;
FIG. 2 is an illustrative operational diagram of a setting unit in the embodiment;
FIG. 3 is a flow chart illustrating main operations of the embodiment;
FIGS. 4A and 4B are views illustrating an operation example of the embodiment;
FIG. 5 illustrates data examples for evaluating a degree of degradation in the embodiment;
FIG. 6 is a block diagram showing a configuration example of the embodiment; and
FIG. 7 is a block diagram showing a configuration example of the embodiment.

### Description of Embodiments

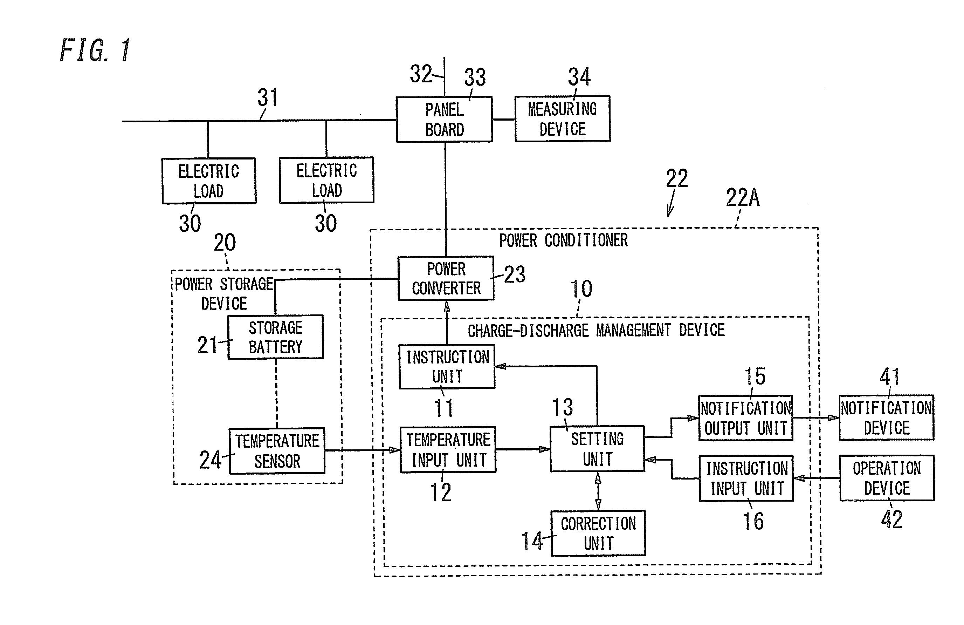

In an example to be explained in the present embodiment, as shown in FIG. 1, a charge-discharge management device 10 is in a housing 22A of a power conditioner 22 including a power converter 23. The charge-discharge management device 10 may be however separated from the power conditioner 22. The charge-discharge management device 10 and the power converter 23 may constitute the power conditioner 22. The power conditioner 22 may be in one housing along with a storage battery 21 so as to form a power storage device 20.

The power conditioner 22 is configured to be connected to a distribution network 31 for supplying electric power to at least one (two or more in the example of FIG. 1) electric load 30. The power conditioner 22 is configured to perform bidirectional transmission of electric power between the distribution network 31 and the storage battery 21. That is, electric power for charging the storage battery 21 is supplied from the distribution network 31, and the storage battery 21 has a function for supplying electric power to the distribution network 31. Examples of a range of the distribution network 31 which the storage battery 21 receives and supplies electric power from and to include a range divided by a responsibility boundary point that is set for a house or business building, and a range divided by a responsibility boundary point that is set for various facilities such as a park, a playground and a street.

The power conditioner 22 includes the power converter 23 and the charge-discharge management device 10. The power converter is configured to perform bidirectional power conversion between the storage battery 21 and the distribution network 31. The charge-discharge management device is configured to manage charge and discharge of the storage battery 21 and give an operational instruction to the power converter 23. The power converter 23 performs bidirectional power conversion between AC and DC when the distribution network 31 is connected to a commercial power supply, and performs bidirectional power conversion between DC and DC when the distribution network 31 supplies DC power. A configuration of the power converter 23 can be selected from various configurations. That is, a technology of the charge-discharge management device 10 explained in the embodiment may be combined with any of various configurations for the power converter 23.

The distribution network 31 is connected to a utility grid of the commercial power supply in general, but may be connected to a distributed power supply such as a photovoltaic power system or a fuel cell. The distribution network may be also connected to both the utility grid and the distributed power supply. FIG. 1 illustrates a configuration in which the distribution network 31 is connected to only a utility grid 32. A panel board 33 is provided between the distribution network 31 and the utility grid 32. A measuring device 34 is provided in the proximity of the panel board 33. The measuring device 34 has a function for measuring electric power consumed by (an) electric loads 30 for each of branch circuits diverging from the panel board 33, and a function for measuring electric power consumption by a main circuit before it diverges. Alternatively, a total of electric power consumption obtained from respective measurement of the branch circuits may be employed as the electric power consumption by the main circuit.

It is known that a lifetime of the storage battery 21 depends on various conditions such as a kind of the storage battery 21, depth of discharge with respect to the storage battery 21, a temperature of the storage battery 21, a number of charge/discharge cycles of the storage battery 21, magnitude of a charge current for the storage battery 21 and magnitude of a discharge current from the storage battery 21. Hereinafter, a temperature of the storage battery 21 is simply referred to as a "battery temperature". In the present circumstances, a lithium ion battery is mainly employed as a large-capacity storage battery 21 that supplies and receives electric power from and to the distribution network 31. A lead storage battery may be however employed.

In a case of the lithium ion battery, it is considered that a lifetime of the lithium ion battery would be shortened if depth of discharge thereof is deepened near a discharge cut-off voltage. In a case of the lead storage battery, it is considered that a lifetime of the lead storage battery would be shortened if discharge thereof is repeated with the depth of discharge shallow, e.g., about 30%. In addition, the storage battery 21 utilizes chemistry, and accordingly it is not preferable that charge and discharge thereof is performed in an environment in which the battery temperature is a high or low temperature. If the charge and discharge is performed in a state of the battery temperature being a high or low temperature, the lifetime is to be shortened.

The lifetime of the storage battery 21 is often represented by a number of charge/discharge cycles (cycle life) until discharge capacity thereof decreases to 50 to 60% with respect to nominal capacity. In a case where the number of charge/discharge cycles cannot be correctly measured like an uninterruptible power supply, the lifetime of the storage battery 21 is often represented by used hours (calendar life).

It is an object of the present embodiment to prevent the lifetime of the storage battery 21 from being shortened by suppressing amplitude of the charge current and amplitude of the discharge current in the environment in which the battery temperature is a high or low temperature. The charge-discharge management device 10 is accordingly configured to manage charge and discharge of the storage battery 21 in consideration of the battery temperature.

The charge-discharge management device 10 includes an instruction unit 11 having a function configured to give, to the power converter 23, an instruction of amplitude of a charge current for the storage battery 21 and amplitude of a discharge current from the storage battery 21. The charge-discharge management device 10 further includes a temperature input unit 12 and a setting unit 13. The temperature input unit is configured to obtain the battery temperature of the storage battery 21. The setting unit is configured to determine amplitude of the charge current and an upper limit of the discharge current in response to the temperature obtained by the temperature input unit 12.

The charge-discharge management device 10 includes, as a main hardware element, a device including a processor (a computer) configured to execute a program(s). Examples of this sort of device include a CPU (Central Processing Unit) which independently includes a processor and is used along with a memory, a microcomputer including a processor and a memory, an FPGA (Filed-Programmable Gate Array), and the like. Thus, the program(s) is(are) stored in a computer-readable medium. The medium is not limited to a nonvolatile semiconductor memory. It may be a storage medium such as a magneto-optical disk. The charge-discharge management device 10 forms functions to be explained below by combining this sort of device with a device forming an interface unit to execute the program.

The power converter 23 may be selected from any of known various configurations. The power converter 23 is configured to perform a bidirectional power conversion. Examples thereof include a configuration including a bridge circuit formed of four switching devices and a configuration including two bridge circuits and an isolation transformer intervening therebetween. In the embodiment, it is assumed that the distribution network 31 is an AC electric circuit. The power converter 23 is accordingly configured to perform power conversion between AC and DC.

The power converter 23 includes a controller (not shown) configured to control On and Off of the switching devices. In accordance with the instruction from the charge-discharge management device 10, the power converter selects (switches) from (between) a state of the storage battery 21 charging (a charge state) and a state of the storage battery 21 discharging (a discharge state). The controller switches operations of the switching devices so as to switch charge of the storage battery 21 and discharge of the storage battery 21, and thereby the power converter 23 switches between the charge state and the discharge state. The controller is also configured to adjust the amplitude of the charge current and the amplitude of the discharge current by adjusting at least one of an on-period and an off-period of the switching devices. That is, the controller performs On and Off control of the switching devices by at least one of PWM control and PFM control in accordance with contents of the instruction from the instruction unit 11.

The instruction unit 11 is configured to not only provide the power converter 23 with an instruction that the storage battery 21 charges or the storage battery 21 discharges, but also provide the controller of the power converter 23 with an instruction to show the amplitude of the charge current and the upper limit of the discharge current that are determined by the setting unit 13. If receiving the instructions from the instruction unit 11, the controller of the power converter 23 adjusts the charge current so that it has the instructed amplitude of the charge current, and also limits the discharge current so that the discharge current is kept at or below the upper limit.

The temperature input unit 12 is configured to intermittently obtain a temperature measured with a temperature sensor 24 configured to measure the battery temperature. In the embodiment, the temperature input unit 12 is configured to obtain the battery temperature at regular intervals. However, in a case where the temperature sensor 24 is configured, when a change in the battery temperature exceeds a prescribed temperature, to notify the temperature input unit 12 of the temperature, the temperature input unit 12 does not require obtaining the battery temperature at regular intervals

The temperature sensor 24 is arranged to measure a temperature selected from a temperature at an outer side of the storage battery 21, an internal temperature of a housing in which the storage battery 21 is (shown in the example of the figure), an internal temperature of the storage battery 21, and an environmental temperature (an outdoor temperature or the like) at which the storage battery 21 is used. These temperatures reflect the internal temperature of the storage battery 21 that is an environmental temperature during the charge and discharge of the storage battery 21, and accordingly can be equivalently employed as the battery temperature.

Depending on a place in which the temperature sensor 24 is disposed, a difference may occur between the temperature measured with the temperature sensor 24 and an actual battery temperature, and a following property of the battery temperature with respect to a change in the temperature measured with the temperature sensor 24 may vary. It is therefore desirable that the charge-discharge management device 10 correct the temperature measured with the temperature sensor 24 in response to a place in which the temperature sensor 24 is disposed before the following operations are performed.

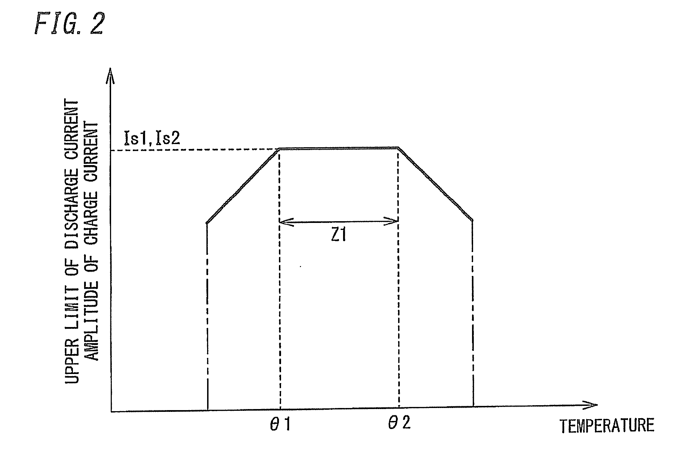

The setting unit 13 has a function configured to determine the magnitude of the charge current and a function configured to determine the upper limit of the discharge current, in response to the battery temperature obtained by the temperature input unit 12 from the temperature sensor 24. As shown in FIG. 2, the setting unit 13 sets a normal range Z1 to the battery temperature and changes the magnitude of the charge current and the upper limit of the discharge current in response to whether the battery temperature is in the normal range Z1 or out of the normal range Z1. FIG. 2 is a conceptual diagram showing a relation between the battery temperature and the magnitude of the charge current or the upper limit of the discharge current. A value of the magnitude of the charge current actually differs from a value of the upper limit of the discharge current.

That is, when the battery temperature is in the normal range Z1, the setting unit 13 sets the magnitude of the charge current to a specified first standard value Is1 and sets the upper limit of the discharge current to a specified second standard value Is2. On the other hand, when the battery temperature is out of the normal range Z1, the setting unit 13 sets the magnitude of the charge current to be below the first standard value Is1 and sets the upper limit of the discharge current to be below the second standard value Is2. In the embodiment, when the battery temperature is out of the normal range Z1, the magnitude of the charge current is set so that a difference between itself and the first standard value Is1 becomes larger as a degree of deviation of the battery temperature from the normal range Z1 is larger. The upper limit of the discharge current is set so that a difference between itself and the second standard value Is2 becomes larger as a degree of deviation of the battery temperature from the normal range Z1 is larger.

The aforementioned rule is set to the setting unit 13, and accordingly each of the magnitude of the charge current and the upper limit of the discharge current is a constant value if the battery temperature is in the normal range Z1. That is, the magnitude of the charge current is the first standard value Is1, and the upper limit of the discharge current is the second standard value Is2. On the other hand, if the battery temperature is out of the normal range Z1, a smaller difference between itself and one of a lower or upper limit of the normal range Z1 is calculated. The magnitude of the charge current is decreased from the first standard value Is1 in response to the difference, and the upper limit of the discharge current is decreased from the second standard value Is2 in response to the difference

For example, when the normal range Z1 is defined by a lower limit θ1 and an upper limit θ2 and the battery temperature is θx (>θ2), a difference Δθ with respect to the normal range Z1 is given by Δθ = θx - θ2. In this example, if appropriate coefficients α, ß (α, ß > 0) are set, the magnitude of the charge current is given by Is1 - α·Δθ and the upper limit of the discharge current is given by Is2 - ß·Δθ. Accordingly, as a degree of deviation of the battery temperature θx from the normal range Z1 is larger, each of the magnitude of the charge current and the upper limit of the discharge current becomes a smaller value.

In the embodiment, the setting unit 13 does not require using a continuous value (an analog value) for each of the magnitude of the charge current and the upper limit of the discharge current. The setting unit 13 may use discrete values (digital values) at regular intervals to each of them. In a case where the discrete values are used for each of the magnitude of the charge current and the upper limit of the discharge current, if the battery temperature is out of the normal range Z1, the magnitude of the charge current is represented by Is1 - n·ΔI and the upper limit of the discharge current is represented by Is2 - m·ΔI where ΔI is one interval of the regular intervals and each of n, m is a natural number.

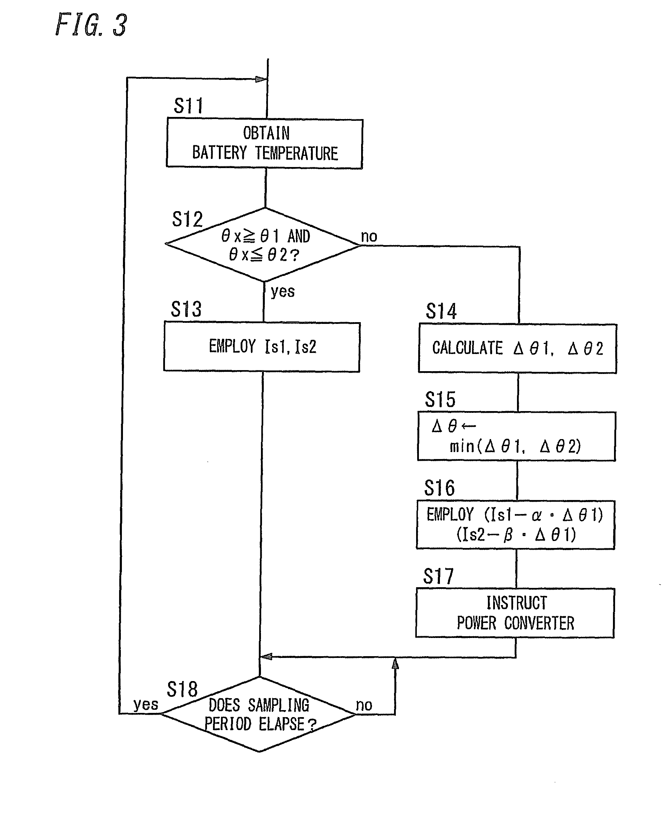

FIG. 3 shows operations of the temperature input unit 12 and the setting unit 13 described above. In this example, it is assumed that the temperature input unit 12 obtains the battery temperature at a constant sampling frequency from the temperature sensor 24. The temperature input unit 12 obtains the battery temperature θx per sampling period (S11). The setting unit 13 compares the battery temperature θx with the lower limit θ1 and the upper limit θ2 of the normal range Z1 (S12).

If the battery temperature θx is the lower limit θ1 or more and the upper limit θ2 or less (S12: yes), the setting unit 13 sets the magnitude of the charge current to the first standard value Is1 and sets the upper limit of the discharge current to the second standard value Is2 (S13).

On the other hand, if the battery temperature θx is below the lower limit θ1 or above the upper limit θ2 (S12: no), the setting unit 13 calculates a difference Δθ1 between the battery temperature θx and the lower limit θ1, and a difference Δθ2 between the battery temperature θx and the upper limit θ2 (S14). The setting unit 13 then employs a lower difference Δθ (= min (Δθ1, Δθ2)) (S15). If the difference Δθ is calculated, the magnitude of the charge current is set to Is1- α· Δθ based on a combination of the first standard value Is1 and the coefficient α, and the upper limit of the discharge current is set to Is2 - ß·Δθ based on a combination of the second standard value Is2 and the coefficient ß (S16). The magnitude of the charge current and the upper limit of the discharge current are given to the instruction unit 11. The instruction unit 11 gives an operational instruction to the power converter 23 based on values from the setting unit 13 (S17). The aforementioned process is repeated per sampling period (S18).

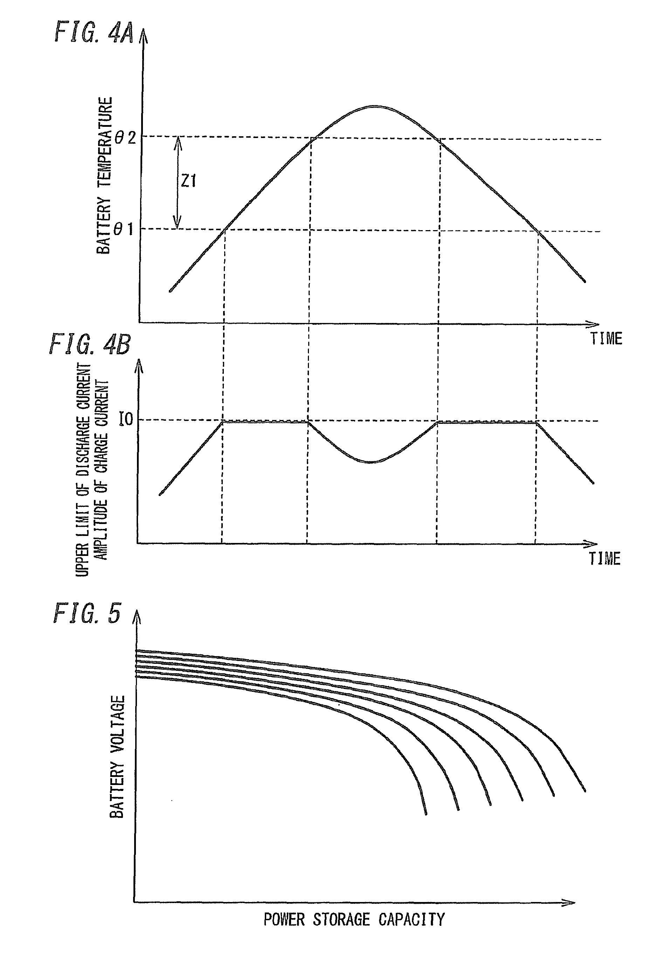

The charge-discharge management device 10 performs the aforementioned operations, and thereby the magnitude of the charge current or the upper limit of the discharge current changes as shown in FIG. 4B when the battery temperature of the storage battery 21 changes as shown in FIG. 4A while time elapses. That is, when the battery temperature θx is out of the normal range Z1, the magnitude of the charge current or the upper limit of the discharge current (both of them are represented as a current value I0 in the figure) becomes a smaller value as a difference between the battery temperature θx and the lower limit θ1 or the upper limit θ2 is larger. When the battery temperature θx is in the normal range Z1, the current value I0 is kept at a constant value.

In the aforementioned example, when the battery temperature θx is out of the normal range Z1, each of the magnitude of the charge current and the upper limit of the discharge current is given by a linear function of the difference Δθ, but may be represented by a quadratic function of the difference Δθ or other relations. The coefficient α for charge may be equal to the coefficient ß for discharge. The coefficients α, ß when the battery temperature is above the normal range Z1 may differ from those when the battery temperature is below the normal range Z1.

In the operations, if the coefficients α, ß are set appropriately, the setting unit 13 can comparatively gently change the magnitude of the charge current and the upper limit of the discharge current of the storage battery 21 without suddenly changing them when the battery temperature is out of the normal range Z1.

That is, the magnitude of the charge current varies according to a degree of deviation of the battery temperature from the normal range Z1. Accordingly, the magnitude of the charge current does not change suddenly. Stress on the storage battery 21 and oscillation of the charge current can be suppressed. The setting unit 13 also changes the upper limit of the discharge current in accordance with the degree of deviation of the battery temperature from the normal range Z1. It is accordingly possible to prevent a sudden large reduction in the discharge current. The upper limit for limiting the discharge current varies according to the battery temperature θx and the discharge current is suppressed in high or low temperature environment in which the battery temperature θx is out of the normal range Z1. Accordingly, stress on the storage battery 21 when it discharges can be suppressed.

The setting unit 13 may have a function configured, when the difference Δθ reaches a predetermined limiting value, to stop the storage battery 21 from charging or stop the storage battery 21 from discharging. That is, the setting unit 13 decreases the magnitude of the charge current or the upper limit of the discharge current when the difference Δθ increases. It is however desirable that charge or discharge be stopped when the difference Δθ reaches the limiting value. Thus, since the difference Δθ is prevented from remaining a large state, the function of the storage battery 21 can be protected.

The lifetime of the storage battery 21 is often represented by the cycle life or the calendar life as stated above. In other words, degradation of the storage battery 21 advances by repetition of charge and discharge. It is known that if the degradation of the storage battery 21 advances, power storage capacity after full charge decreases and a battery voltage decreases. Therefore, permissible ranges with respect to the amplitude of the charge current and the discharge current, after the degradation of the storage battery 21 advances, become narrower in comparison with a case where the degradation of the storage battery 21 does not advance.

Because of this, the charge-discharge management device 10 in the embodiment includes a correction unit 14 configured to evaluate a degree of degradation of the storage battery 21 to more decrease the magnitude of the charge current and the upper limit of the discharge current as the degree of degradation more advances. It is desirable, but not indispensable, that the correction unit 14 be provided.

The correction unit 14 calculates an index value representing the degree of degradation of the storage battery 21 to correct the amplitude of the charge current and the upper limit of the discharge current based on the index value. A number of charge/discharge cycles or used hours is or are used for the index value based on the cycle life or the calendar life.

Based on changes in electric storage capacity and a battery voltage by the degradation of the storage battery 21, the correction unit 14 may measure an electric charge by discharge and a change width of the battery voltage before and after the discharge to convert a combination of both of them into the index value. A data table is used for the conversion from the combination, of the electric charge by discharge and the change width of the battery voltage before and after discharge, into the index value.

The data table can be set based on a relation as shown in FIG. 5. Each of curved lines in FIG. 5 represents a degree of degradation. The index value representing a degree of degradation can be obtained in response to any curved line corresponding to a relation between an electric charge by discharge and a change width of the battery voltage before and after the discharge.

If obtaining the index value representing a degree of degradation of the storage battery 21, the correction unit 14 more decreases the amplitude of the charge current and the upper limit of the discharge current as the degree of degradation represented by the index value more advances. The first standard value Is1 is decreased in order to decrease the amplitude of the charge current, and the second standard value Is2 is decreased in order to decrease the upper limit of the discharge current. A relation between the index value representing a degree of degradation and the first and second standard values Is1 and Is2 is determined based on specifications, capacity and the like of the storage battery 21.

In the example, the correction unit 14 makes a correction by more decreasing the first and second standard values Is1 and Is2 as the degradation of the storage battery 21 more advances, but may be configured to make a correction by more increasing the coefficients α, ß as the degradation more advances.

As stated above, the setting unit 13 provided in the charge-discharge management device 10 decreases the amplitude of the charge current and the upper limit of the discharge current if the battery temperature measured with the temperature sensor 24 is out of the normal range Z1. There is however a possibility that if the upper limit of the discharge current is decreased, electric power supplied to the electric loads 30 is decreased, so that comfort to be obtained by using the electric loads 30 will be spoiled. It is therefore desirable that a user be allowed to select performing an operation that gives priority to the lifetime of the storage battery 21 or performing an operation that gives priority to use of the electric loads 30.

In order to allow the user to select giving priority to the lifetime of the storage battery 21 or giving priority to the use of the electric loads 30, the charge-discharge management device 10 includes a notification output unit 15 and an instruction input unit 16. The notification output unit and the instruction input unit enable a user to use a notification device 41 and an operation device 42 as interfaces between themselves and the user, respectively.

The notification output unit 15 is configured to output a notification signal when the battery temperature obtained from the temperature input unit 12 is out of the normal range Z1 during charge or discharge of the storage battery 21. In the example of FIG. 1, the notification signal is supplied to the notification device 41. The instruction input unit 16 is configured to wait to receive an instruction to keep or stop the storage battery 21 charging or discharging if the notification output unit 15 outputs the notification signal. The instruction unit 11 has a function configured, if the instruction input unit 16 receives the instruction to stop the storage battery 21 charging or discharging, to stop the storage battery 21 from charging or discharging.

It is desirable that the notification device 41 be configured to give both audible notification such as notification sound and visual notification such as notification lamp or display for notification. However, the notification device may be configured to give any one of the audible notification and the visual notification. A touch panel as the operation device 42 may be employed. The operation and display device includes a flat panel display as the notification device 41 and a touch panel as the operation device 42. The touch panel is overlaid on a screen of the flat panel display. The notification device 41 and the operation device 42 may be configured to include a housing commonly used along with the charge-discharge management device 10, or may include a housing that differs from that of the charge-discharge management device 10, and be configured to communicate with the charge-discharge management device 10. A general purpose device may be employed as the notification device 41 and the operation device 42 by providing the notification output unit 15 and the instruction input unit 16 with a function configured to communicate with the general purpose device such as a smartphone, a tablet terminator or a personal computer.

In the aforementioned configuration, when the battery temperature is out of the normal range Z1 during a period of time when the storage battery 21 charges or during a period of time when the storage battery 21 discharges, the notification output unit 15 issues the notification signal to the notification device 41 in a charge or discharge state. That is, a user is notified through the notification device 41 that the battery temperature is out of the normal range Z1, and the instruction input unit 16 waits to receive an input from the operation device 42.

If a user gives priority to the use of the electric loads 30 and operates the operation device 42 so as to continue charge or discharge, the instruction unit 11 gives an instruction to continue charge or discharge to the power converter 23. On the other hand, if the user gives priority to the lifetime of the storage battery 21 and operates the operation device 42 so as to stop charge or discharge, the instruction unit 11 gives an instruction to stop charge or discharge to the power converter 23. It is desirable that the instruction input unit 16 continue charge or discharge if a state with no input from the operation device 42 continues for a predetermined time while waiting to receive an input from the operation device 42. That is, charge or discharge of the storage battery 21 is stopped only if the user operates it on purpose.

As stated above, the instruction input unit 16 waits to receive an input from the operation device 42 in a charge state of the storage battery 21 or a discharge state of the storage battery 21. Accordingly, if an instruction to stop it is not entered, charge or discharge is continued. That is, the storage battery 21 can be prevented from receiving stress caused by a sudden change in the charge current or the discharge current.

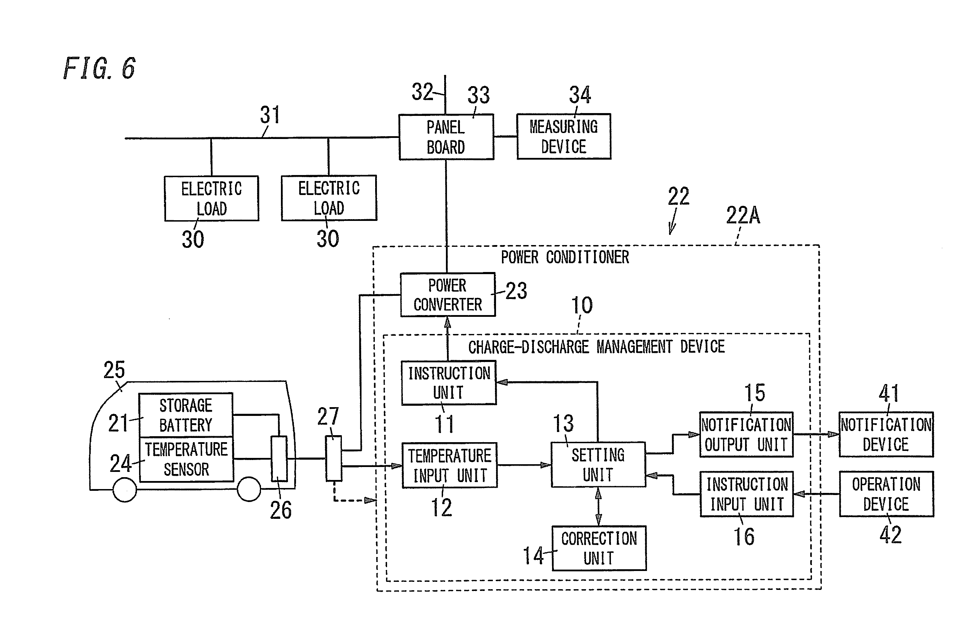

In the storage battery 21 of the configuration example described above, it is assumed that the storage battery 21 is in a dedicated housing. However, the storage battery 21 may be equipped for an electrically driven vehicle 25 as shown FIG. 6. The electrically driven vehicle 25 means a vehicle configured to consume electric power as traveling energy such as an electric car, a hybrid car and an electric motorcycle. This sort of electrically driven vehicle 25 consumes electric power as traveling energy, and is accordingly equipped with the storage battery 21 having a comparatively large capacity. Therefore, electric power of the storage battery 21 can be used for operations of the electric loads 30.

When the storage battery 21 which the electrically driven vehicle 25 is equipped with supplies and receives electric power to and from the distribution network 31, a power coupler 26 provided for the electrically driven vehicle 25 is coupled to a power coupler 27 provided at a side of the distribution network 31. In the example of FIG. 6, the power coupler 27 is provided at a side of the power conditioner so as to be allowed to be coupled to the power coupler 26. The power coupler 26 and the power coupler 27 may be any configuration as long as they are configured to select from a coupled state that allows the storage battery 21 to supply or receive electric power to or from the distribution network 31 and a separated state that allows the electrically driven vehicle 25 to travel.

For example, the power coupler 26 and the power coupler 27 may be configured to allow electric circuits to be coupled to or separated from each other like a relation between a plug and a receptacle. The power coupler 26 and the power coupler 27 may be configured to transmit electric power by non-contact power supply technology. In this case, a loss that occurs when electric power is transmitted between the storage battery 21 and the distribution network 31 can be reduced by using non-contact power supply technology having a high power transmission efficiency such as resonant magnetic field type or resonant electric field type.

When the storage battery 21 is equipped for the electrically driven vehicle 25, the charge-discharge management device 10 operates for a period of time while the storage battery 21 is coupled to the distribution network 31. That is, the instruction unit 11 operates while it is detected that the power coupler 26 of the electrically driven vehicle 25 is coupled to the power coupler 27 at the side of the distribution network 31.

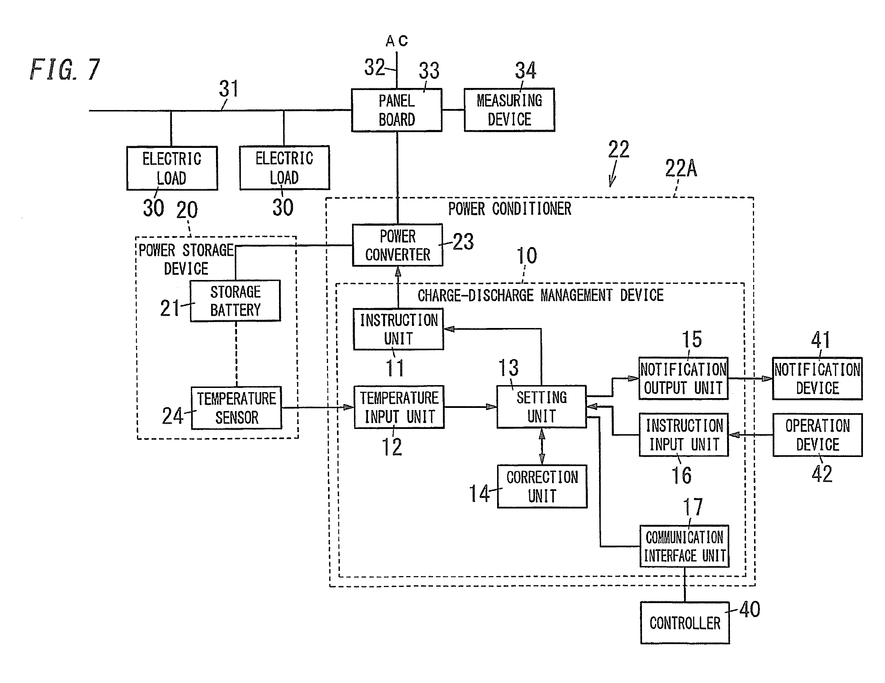

As shown in FIG. 7, the charge-discharge management device 10 may include a function configured to cooperate with a controller 40 for managing operations of the electric loads 30. The charge-discharge management device 10 shown in FIG. 7 includes a communication interface unit 17 configured to communicate with the controller 40.

The controller 40 is what is called a HEMS (Home Energy Management System) controller, and configured to control the operations of the electric loads 30 by communicating with the electric loads 30 each of which has a communication function. This sort of controller 40 would help to suppress electric charge to be paid by a customer and energy to be consumed in a consumer facility, by managing energy consumed in the consumer facility.

In the charge-discharge management device 10 shown in FIG. 7, the setting unit 13 is to communicate with the controller 40 through the communication interface unit 17. The setting unit 13 has a function configured to determine the magnitude of the charge current based on information obtained from the controller 40 and a function configured to notify the controller 40 of a determined upper limit of the discharge current.

That is, for a period of time while the storage battery 21 is charging, the setting unit 13 receives, from the controller 40, information on available electric power that represents a difference between electric power supplied from a power supply source and electric power consumed by the electric loads 30, and determines the amplitude of the charge current based on the information on the available electric power. The power supply source is a power supply for supplying electric power to the storage battery 21 and the electric loads 30, and is a commercial power supply AC in the example of the figure. The system in FIG. 7 may however include the distributed power supply. For a period of time while the storage battery 21 is discharging, the setting unit 13 is to notify the controller 40 of the upper limit of the discharge current, which is a criterion of electric power that can be supplied from the storage battery 21 to the electric loads 30.

Thus, the charge-discharge management device 10 communicates with the controller 40, thereby being capable of determining the charging current based on the information on the available electric power that can be used for charge of the storage battery 21. The charge-discharge management device also notifies the controller 40 of the upper limit of the discharge current from the storage battery 21, thereby being capable of appropriately distributing electric power stored in the storage battery 21 among the electric loads 30.

In the configuration examples described above, both the amplitude of the charge current when the storage battery 21 charges and the upper limit of the discharge current when the storage battery 21 discharges are adjusted according to the battery temperature. However, only the amplitude of the charge current of the storage battery 21 may be adjusted according to the battery temperature. The lifetime of the storage battery 21 can be prolonged just by limiting the amplitude of the charge current in an environment in which the battery temperature is a high or low temperature with respect to the normal range.

## Claims

1. A charge-discharge management device, configured to manage charge and discharge states of a storage battery, for supplying and receiving electric power to and from a distribution network for supplying electric power to an electric load, wherein the charge-discharge management device comprises:
an instruction unit having a function configured to indicate magnitude of a charge current for the storage battery;
an temperature input unit configured to obtain a battery temperature of the storage battery; and
a setting unit having a function configured to set the magnitude of the charge current in accordance with the battery temperature obtained through the temperature input unit, the setting unit further having
a function configured to set the magnitude of the charge current to a specified first standard value if the battery temperature is in a normal range, and
a function configured, if the battery temperature is out of the normal range, to set the charge current to be below the first standard value and to more increase a difference between the charge current and the first standard value as a degree of deviation from the normal range is larger.

2. The charge-discharge management device of claim 1, wherein
the instruction unit further has a function configured to indicate an upper limit of a discharge current from the storage battery, and
the setting unit further has
a function configured to set the upper limit of the discharge current to a specified second standard value if the battery temperature is in the normal range, and
a function configured, if the battery temperature is out of the normal range, to set the upper limit of the discharge current to be below the second standard value and to more increase a difference between the upper limit of the discharge current and the second standard value as the degree of deviation from the normal range is larger.

3. The charge-discharge management device of claim 2, further comprising
a notification output unit configured to output a notification signal if the battery temperature obtained through the temperature input unit is out of the normal range during a period of time while the storage battery is charging or discharging, and
an instruction input unit configured to wait to receive an instruction to keep or stop the storage battery charging or discharging if the notification output unit outputs the notification signal, wherein
the instruction unit has a function configured, if the instruction input unit receives the instruction to stop the storage battery charging or discharging, to stop the storage battery from charging or discharging.

4. The charge-discharge management device of claim 2 or 3, further comprising a correction unit configured to calculate an index value representing a degree of degradation of the storage battery to more decrease the first and second standard values as the degree of degradation represented by the index value more advances.

5. The charge-discharge management device of any one of claims 2-4, further comprising a communication interface unit configured to communicate with a controller that manages an operation of the electric load, wherein
the setting unit is configured
to be notified of available electric power from the controller through the communication interface unit during a period of time while the storage battery is charging, the available electric power being a difference between electric power supplied from a power supply source for supplying electric power to the storage battery and the electric load, and electric power consumed by the electric load, the upper limit of the discharge current being set based on the available electric power, and
to notify the controller through the communication interface unit of the upper limit of the discharge current, which is a criterion of electric power that can be supplied from the storage battery to the electric load, during the period of time while the storage battery is discharging.

6. The charge-discharge management device of any one of claims 2-5, wherein
the storage battery is equipped for an electrically driven vehicle configured to consume electric power as traveling energy, the electrically driven vehicle comprising a power coupler configured to select from a coupled state that allows the storage battery to supply or receive electric power to or from the distribution network and a separated state that it is separated from the distribution network and allows the electrically driven vehicle to travel, and
the instruction unit is configured to operate for a period of time while the storage battery is coupled to the distribution network.

7. A power conditioner, comprising
a charge-discharge management device of any one of claims 1-6, and
a power converter configured to perform bidirectional power conversion between the storage battery and the distribution network based on a content that is indicated from the charge-discharge management device.

8. A power storage device, comprising
the power conditioner of claim 7,
the storage battery, and
one housing in which the power conditioner and the storage battery are housed.

9. A program, for allowing a computer to function as the charge-discharge management device of any one of claims 1-6.

## Amended claims

### Amended claims under Art. 19.1 PCT

**1.** (Amended) A charge-discharge management device, configured to manage charge and discharge states of a storage battery, for supplying and receiving electric power to and from a distribution network for supplying electric power to an electric load, wherein the charge-discharge management device comprises:
an instruction unit having a function configured to indicate magnitude of a charge current for the storage battery;
an temperature input unit configured to obtain a battery temperature of the storage battery; and
a setting unit having a function configured to set the magnitude of the charge current in accordance with the battery temperature obtained through the temperature input unit, the setting unit further having
a function configured to set the magnitude of the charge current to a specified first standard value if the battery temperature is in a normal range, and
a function configured, if the battery temperature is out of the normal range, to set the charge current to be below the first standard value and to more increase a difference between the charge current and the first standard value as a degree of deviation from the normal range is larger, wherein
the instruction unit further has a function configured to indicate an upper limit of a discharge current from the storage battery, and
the setting unit further has
a function configured to set the upper limit of the discharge current to a specified second standard value if the battery temperature is in the normal range, and
a function configured, if the battery temperature is out of the normal range, to set the upper limit of the discharge current to be below the second standard value and to more increase a difference between the upper limit of the discharge current and the second standard value as the degree of deviation from the normal range is larger,
the charge-discharge management device further comprises
a notification output unit configured to output a notification signal if the battery temperature obtained through the temperature input unit is out of the normal range during a period of time while the storage battery is charging or discharging, and
an instruction input unit configured to wait to receive an instruction to keep or stop the storage battery charging or discharging if the notification output unit outputs the notification signal, and
the instruction unit has a function configured, if the instruction input unit receives the instruction to stop the storage battery charging or discharging, to stop the storage battery from charging or discharging.

**2.** (Canceled)

**3.** (Canceled)

**4.** (Amended) The charge-discharge management device of claim 1, further comprising a correction unit configured to calculate an index value representing a degree of degradation of the storage battery to more decrease the first and second standard values as the degree of degradation represented by the index value more advances.

**5.** (Amended) The charge-discharge management device of claim 1 or 4, further comprising a communication interface unit configured to communicate with a controller that manages an operation of the electric load, wherein
the setting unit is configured
to be notified of available electric power from the controller through the communication interface unit during a period of time while the storage battery is charging, the available electric power being a difference between electric power supplied from a power supply source for supplying electric power to the storage battery and the electric load, and electric power consumed by the electric load, the upper limit of the discharge current being set based on the available electric power, and
to notify the controller through the communication interface unit of the upper limit of the discharge current, which is a criterion of electric power that can be supplied from the storage battery to the electric load, during the period of time while the storage battery is discharging.

**6.** (Amended) The charge-discharge management device of any one of claims 1, 4 and 5, wherein
the storage battery is equipped for an electrically driven vehicle configured to consume electric power as traveling energy, the electrically driven vehicle comprising a power coupler configured to select from a coupled state that allows the storage battery to supply or receive electric power to or from the distribution network and a separated state that it is separated from the distribution network and allows the electrically driven vehicle to travel, and
the instruction unit is configured to operate for a period of time while the storage battery is coupled to the distribution network.

**7.** (Amended) A power conditioner, comprising
a charge-discharge management device of any one of claims 1 and 4-6, and
a power converter configured to perform bidirectional power conversion between the storage battery and the distribution network based on a content that is indicated from the charge-discharge management device.

**8.** Original) A power storage device, comprising
the power conditioner of claim 7,
the storage battery, and
one housing in which the power conditioner and the storage battery are housed.

**9.** (Amended) A program, for allowing a computer to function as the charge-discharge management device of any one of claims 1 and 4-6.
